# EUROPEAN PATENT SPECIFICATION

(11) **EP 1 443 243 B1**
(45) Date of publication and mention of the grant of the patent: **31.05.2006**
(21) Application number: 03028455.8
(22) Date of filing: 12.12.2003
(51) Int. Cl.: F16G 11/10

(54) **Cord lock device and an article including such device**
Vorrichtung zum Festklemmen eines Seils und solch eine Vorrichtung aufweisender Artikel
Dispositif de blocage pour corde et article incluant un tel dispositif

(30) Priority: 31.01.2003 US 355004
(43) Date of publication of application: 04.08.2004
(73) Proprietor: Salomon S.A., 74370 Metz-Tessy (FR)
(72) Inventor: Berns, Jason, 74000 Annecy (FR)

(56) References cited:
- EP-A- 0 174 498
- EP-A- 0 291 154
- EP-A- 0 719 958
- EP-A- 0 775 845
- US-A- 1 879 991
- US-A- 5 263 202
- US-B1- 6 305 053
- PATENT ABSTRACTS OF JAPAN vol. 1998, no. 14, 31 December 1998 (1998-12-31) -& JP 10 257907 A (SUKOOBILL JAPAN KK), 29 September 1998 (1998-09-29)

## Description

### BACKGROUND OF THE INVENTION

### 1. Field of the Invention

The invention relates to a cord locking device and to an article, such as a garment, that includes such device.

More particularly, the invention relates to cord locks such as those found on goods, such as garments, luggage or shoes, on which a cord is slidably mounted on the goods so as to fulfill a tightening and/or closing function on the goods. In this context, the lock allows for the adjustment of the useful length of the cord.

### 2. Description of Background and Relevant Information

There are numerous types of cord locks, most of which are designed so as to be slidably mounted on the cord, without any connection to the goods on which the cord is mounted. The lock is then often constituted of two pieces that are movably mounted one with respect to the other and that are biased by a spring so as to be wedged on the cord. However, this type of lock is not very easy to use since it requires using both hands, that is, one hand to hold the cord and the other hand to handle the lock and move it with respect to the cord.

To overcome this drawback, it is known to provide systems for attaching the lock to the garment or to the article in question. In this way, it becomes possible to maneuver the assembly with only one hand, for example, by pulling on the cord.

In U.S. Patent No. 5,263,202, a one-piece lock is disclosed that is provided to be enclosed in a fold of the garment with which it is associated, and that ensures a locking of the cord through a shearing effect. One drawback of this arrangement is that the lock is not fixed inside the fold and can move or (turn) therein, consequently it is not easy to handle the lock to unlock the cord. Furthermore, the user does not see the lock and must proceed by trial and error, which makes the locking operation even more complicated.

In European Patent Application Publication No. 0 719 958, a locking device is disclosed that is adapted to be attached to a surface of a flexible panel, for example, a flap of fabric of a garment. This "cord stopper" is composed of three pieces: a base, a cover, and a plate that allows attaching the stopper to the panel in the manner of a rivet. This device is thus costly to produce. In addition, the locking of the cord is obtained by clamping the cord against a stationary wall, which is generally less efficient than a locking through a shearing effect.

### SUMMARY OF THE INVENTION

The invention provides for a lock that is simple and inexpensive to produce, and yet easy for the user to handle.

To this end, the invention proposes a device for locking at least one cord, having the features of claim 1.

### BRIEF DESCRIPTION OF DRAWINGS

Other features and advantages of the invention will become apparent from reading the detailed description that follows, with reference to the attached drawings, in which:
FIG. 1 is an overall view of a jacket equipped with a lock according to the invention;
FIG. 2 is an enlarged view of a part of FIG. 1 showing more specifically the setting of the lock in the garment;
FIG. 3 is a cross-sectional view of the lock in the sliding position, with a cord shown in dotted and dashed lines;
FIG. 4 is a cross-sectional view of the lock in the locking position, with a cord shown in dotted and dashed lines;
FIG. 5 is a cross-sectional view of the lock in its molding configuration;
FIG. 6 is a top view of the locking device in its molding configuration;
FIG. 7 is a schematic front view showing the passage-holes of the lock which ensure the locking of the cord;
FIG. 8 is a schematic view showing a first possibility for mounting the lock on a panel according to the invention;
FIG. 9 is a schematic view showing a second possibility for mounting the lock on a panel according to the invention.

### DETAILED DESCRIPTION OF THE INVENTION

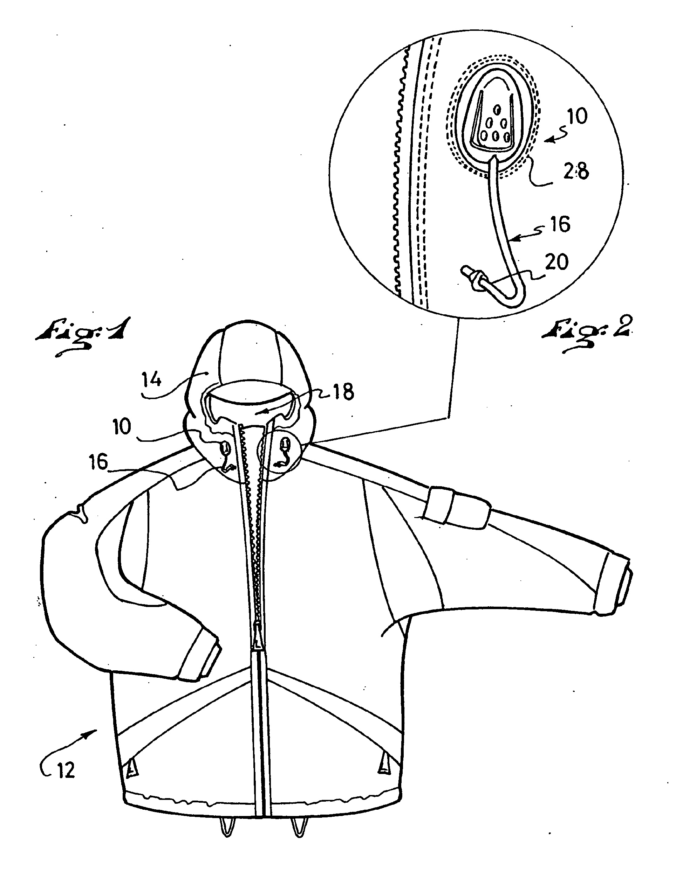

FIG. 1 shows an example for using a device 10 (or lock) for locking a cord according to the invention. Indeed, such a lock can be used on an article, such as a garment, and, more specifically, such as a jacket 12, for example. In the example shown, the jacket 12 has a hood 14 that is provided with a tightening cord 16 adapted to adjust the size of the opening 18 for the face. Thus, the cord 16 runs through a sheath (not shown) that follows the edge of the opening 18. The two ends, or end portions, 20 of the cord 16 project from the area of the two ends of the sheath. By adjusting the length of the cord 16 that is actually contained within the sheath, one can cause a gathering of the fabric of the hood 14 along the sheath when the length of the cord 16 is less than the full length of the sheath and, thereby, a narrowing of the opening 18 is provided for the face.

The cord can have various forms depending upon the application envisioned. In the case of the garment shown, it is preferable that a flexible cord be used. In certain cases, one can use an extensible cord. In other cases, a cord having a very low extensibility is preferred, for example, a cord having a core reinforced by polyaramid fibers.

In order to adjust the length of the cord 16 that is actually contained within the sheath, an arrangement for locking the cord at each of the ends of the sheath can be provided. To facilitate such an adjustment, it is preferred to use a locking device that is automatic, that is, that automatically locks the cord.

The locking device 10 encompassed by the invention, shown at a greater scale in FIG. 2, is adapted to cover the hole corresponding to the opening end of the sheath, such that the cord emerges outside of the sheath by passing through the lock 10.

The device according to the invention is therefore adapted to be attached to a panel, in this case, a fabric panel, in alignment with a hole provided in this panel and through which the cord passes.

To this end, one can see in FIGS. 3-6 that the lock 10 has a base 22 that is adapted to allow attaching the lock 10 to the panel. This base has a portion in the form of a ring 24 that extends in a plane that will hereinafter be considered, for convenience of description, to be horizontal. Indeed, the description that follows will mainly refer to FIGS. 3 and 4, and the geometric terms used, such as horizontal, vertical, longitudinal, transverse, etc., refer to the position of the lock in these figures, without these terms being interpreted as limiting the scope of the invention.

In its center, the ring 24 reveals an orifice 26 that is adapted to be positioned in alignment with the hole of the panel through which the cord 16 passes. The planar, or substantially planar, ring 24 allows for the attachment of the lock 10 on the panel through various techniques; these techniques can vary, depending on the material of the lock 10, or depending on the material of the panel. In the example shown in FIG. 1, the panel is a flexible panel made of fabric, and the lock 10 is made by molding a plastic material, for example, polyamide. The planar ring 24 has a vertical thickness on the order of 1 millimeter (mm), and attaching the ring on the panel can be achieved by a stitched seam 28, as shown in FIG. 2, but also by gluing or by ultrasonic sealing. Furthermore, the ring 24 is not necessarily planar and that it could also extend along a tridimensional surface.

A wall rises from the inner edge of the ring 24, which forms a dome 30 above the orifice 26, and which closes this orifice 26 such that, when seen from the top, the dome 30 hides the orifice 26 and, consequently, the panel hole. In this wall shaped like a dome 30, a cutout 32 demarcates what will be designated by the term maneuvering member 34. Seen from the top, the cutout 32 has a form that is similar to that of a "U" with two longitudinal edges 36 and a transverse edge 38. The maneuvering member 34 that is demarcated by this cutout 32 is therefore attached to the remainder of the wall shaped like a dome 30 by a linking zone 40 that is arranged opposite the transverse edge 38 of the U-shaped cutout, and that forms an articulation having a substantially transverse axis. The maneuvering member 34 is formed substantially at the top of the dome 30 such that it extends substantially along a horizontal direction and, when in use, it can pivot from a sliding position, shown in FIG. 3, to a locking position, shown in FIG. 4.

In these figures, one can see that the maneuvering member 34 has a transverse wall 42 that extends vertically downward, along the transverse edge 38 of the cutout 32 toward the interior of the dome 30. This transverse wall 42 of the maneuvering member 34 has lateral extensions 44 that extend along the longitudinal edges 36 and allow rigidifying the transverse wall 42, and, generally speaking, the entire maneuvering member 34. Facing this transverse wall 42, the dome itself also has a transverse partition 46 that extends vertically downward from the transverse edge 38.

The transverse wall 42 and the transverse partition 46 are each bored with a passage-hole (48 and 50, respectively) that substantially has the size of the diameter of the cord 16. When the maneuvering member is in the sliding position as shown in FIG. 3, the passage-holes 48, 50 are substantially aligned. In this position, one can insert the cord in the lock, for example, from outside of the dome 30, pass it through the two passage-holes 48, 50, and pull it out through the orifice 26 demarcated by the ring 24. In this sliding position, the cord can slide freely in the lock with very little interfering friction.

Conversely, when the maneuvering member is in its locking position, as shown in FIG. 4, the two holes 48, 50 are off-centered from each other. Since the wall 42 and the partition 46 are very close to each other (their spacing is preferably less than the diameter of the cord), the cord is immobilized by shearing. This shearing is at the outset of the forces of friction between the cord and the lock, which causes the locking. Nevertheless, it is to be understood that if one exerts a very substantial traction force on the cord, one can generate a sliding of the cord with respect to the lock. It has been noted, though, that the locking of the cord through a shearing effect had better results than a locking through a mere flattening of the cord against an immobilized obstacle. In the example shown, the locking position is a position in which the maneuvering member 34 is raised with respect to its sliding position.

Still according to the example shown, the maneuvering member is in its normal locking position, i.e., it returns automatically to its locking position, whereas, in order to bring it to its sliding position, the user must press vertically downward on the upper surface of the maneuvering member 34 to push the latter toward the ring 24. Advantageously, the elastic return of the maneuvering member 34 is ensured without using specific elements, by simply using the elastic property of the linking zone that forms the hinge between the maneuvering member 34 and the base 22.

In order to properly locate the sliding position, the maneuvering member 34 and the base 22 have, in the area of the transverse edge 38 of the U-shaped cutout, abutment surfaces that come into contact with each other when the maneuvering member reaches the sliding position.

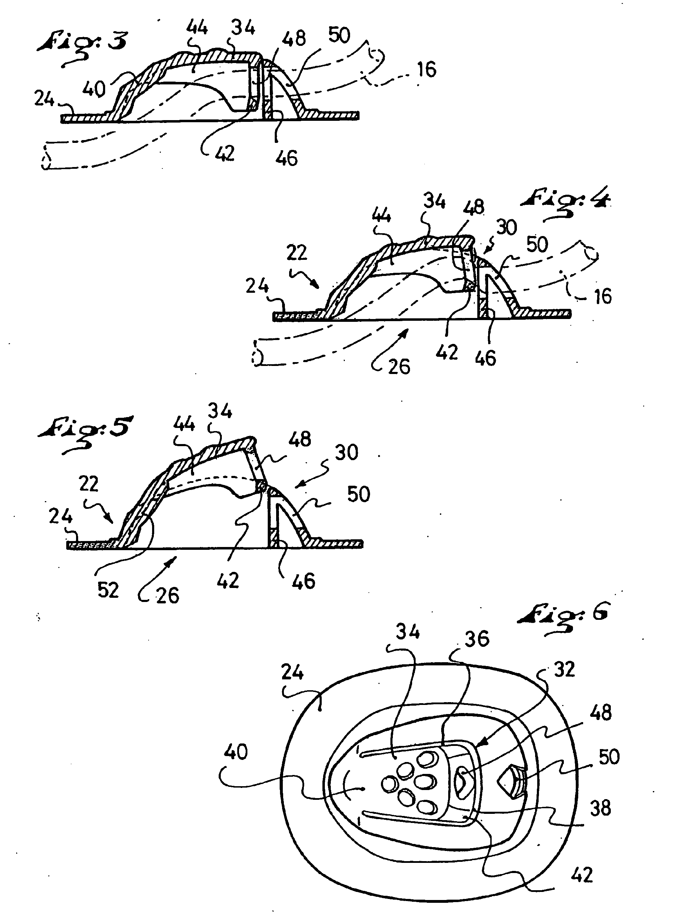

In FIGS. 5 and 6, one can see the shape of the lock when it is free, i.e., when it is not subject to any force and when no cord is engaged therein. This position corresponds in fact to the molding configuration of the lock. It is noted that, in this position, the maneuvering member 34 is completely raised, such that even its vertical wall 42 is then outside of the space demarcated by the dome. One therefore notes that it is by elastic deformation, particularly of the linking zone 40, that the maneuvering member 34 is brought towards its locking position and, even more so, towards its sliding position. Furthermore, one can see in the cross-sectional views that the wall forming the dome 30 and the maneuvering member 34 can have an excess thickness, in this case a rib 52, so as to rigidify the linking zone 40, which allows increasing the capacity for locking the cord.

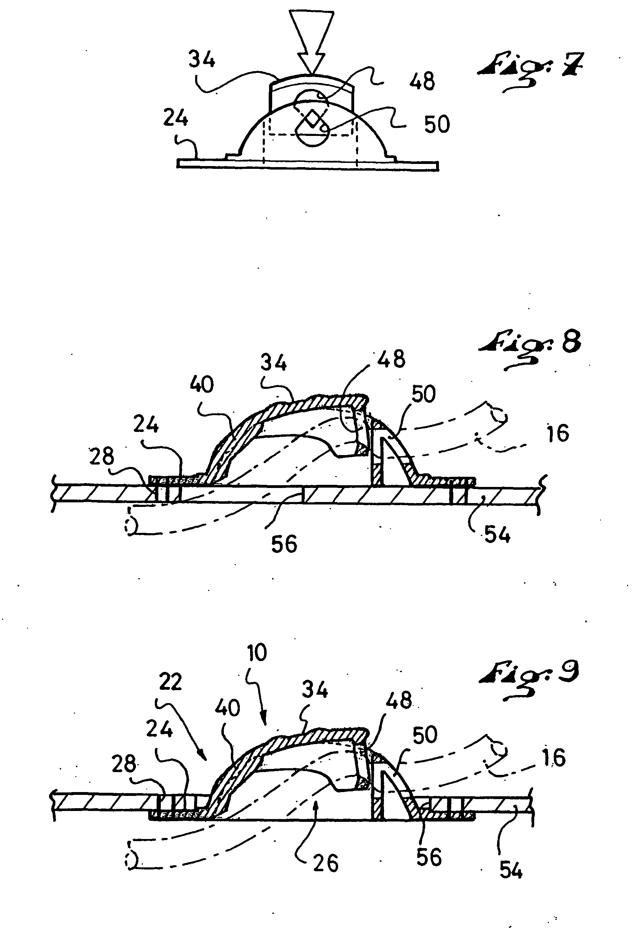

Still with the object of improving the efficiency of locking the cord, one can see in FIG. 7 that the passage-holes can have a special profile. Indeed, one can see that each of the passage-holes 48, 50 has a profile that is circular over half of its contour and V-shaped over the other half of the contour. The profiles of the two holes 48, 50 are inverted and provided such that, in the locking position, the cord is pressed against the V-shaped portions of the hole profiles, and that these profiles generate a substantial necking effect on the cord.

FIGS. 8 and 9 show two possibilities for mounting the lock 10 on a panel 54 having a hole 56 through which the cord 16 runs. In the embodiment of FIG. 8, the lock 10 is mounted above the panel, and it completely covers the hole 56. The lock therefore hides the hole and is completely accessible.

Conversely, in the embodiment of FIG. 9, the lock is mounted through the orifice 56. Thus, the upper surface of the attaching ring 24 is supported against the lower surface of the panel 54, the contour of the hole 56 substantially having the same shape as the ring 24. The dome 30 extends upward through the hole 56, so as to extend above the upper surface of the panel 54. In this way, the lock is aesthetically integrated completely into the panel 54, since the zone for attaching the lock is, for example, on the inner side of the garment, whereas the maneuvering member 34 is completely visible and accessible from the outside.

The invention has been described herein in the case where only one cord passes through the lock. Nevertheless, one can easily design the device to receive several cords or several strands of a same cord. The lock can then be identical, since all of the cords or all of the strands pass through the orifices 26, 48, 50 of the base and maneuvering member. One can also provide for the orifices to be reduced, depending on the number of cords or strands. One can further provide for the lock to be equipped with several parallel maneuvering members to control the locking and unlocking of each cord separately.

## Claims

1. A device for locking at least one cord (16), said cord (16) coming out through a hole (56) of a panel (12, 54), said locking device comprising an envelope (22, 34) having an inlet orifice (50, 26) and an outlet orifice (50, 26) for the cord and a maneuvering member (34), said maneuvering member (34) comprising a passage (48) through with the cord (16) runs, and wherein the maneuvering member (34) is movable between a sliding position in which the passage (48) is substantially aligned with one (50, 26) of the orifices, and a locking position in which said passage (48) is offset from said orifice (50, 26), **characterized in that** the envelope (22, 34) comprises a base (22) adapted to be attached to the panel, and **in that** one (50, 26) orifice of the outlet and inlet orifices is arranged in alignment with the hole (56) of the panel.

2. Locking device according to claim 1, **characterized in that** the maneuvering member (34) is made in one piece with the base (22).

3. A locking device according to claim 2, **characterized in that** the base (22) and the maneuvering member (34) are made in one piece as an injection-molded plastic assembly.

4. A locking device according to one of claims 1 to 3, **characterized in that** the maneuvering member (34) is movable from the locking position to the sliding position through elastic deformation.

5. A locking device according to one of claims 1 to 4, **characterized in that** the maneuvering member (34) and the base (22) comprise respective abutment surfaces cooperable to determine the sliding position of the maneuvering member.

6. A locking device according to one of claims 1 to 5, **characterized in that** the passage (48) of the cord in the maneuvering member is inserted in the path of the cord (16) between the inlet (50) and outlet (20) orifices of the base (22).

7. A locking device according to one of claims 1 to 6, **characterized in that** one (26) of the orifices of the base is demarcated by a zone (24) for attaching the base (22, 24) of the panel.

8. A locking device according to claim 7, **characterized in that** the attaching zone (24) forms a closed contour.

9. A locking device according to one of claims 1 to 8, **characterized in that** the attaching zone (24) is attached to one side of the panel (54); and **characterized in that** at least the maneuvering member (34) projects from the other side of the panel through the hole (56).

10. A locking device according to one of claims 1 to 9, **characterized in that** the panel (54) is a flexible panel.

11. A locking device according to one of claims 1 to 10, **characterized in that** the base (22, 24) is attached to the panel by gluing, sealing, or stitched seam.

12. A locking device according to one of claims 1to 11, **characterized in that** the maneuvering member (34) is movable along a general direction substantially perpendicular to a general plane of the panel (54) to which the device (10) is attached.

13. A locking device according to one of claims 1 to 12, **characterized in that** the inlet orifice (50) extends in a plane that is substantially perpendicular to a general plane of the panel (54) to which the device is attached.

14. A locking device according to one of claims 1to 13, **characterized in that** the device can receive several cords or several strands of a same cord.

15. A garment comprising a locking device according to one of claims 1 to 14.

## Patentansprüche

1. Vorrichtung zum Blockieren mindestens einer Schnur (16), wobei die Schnur aus einem Loch (56) eines Feldes (12, 54) hervortritt, wobei die Blockiervorrichtung eine Hülle (22, 34) aufweist mit einer Eingangsöffnung (50, 26) und einer Ausgangsöffnung (50, 26) für die Schnur und einem Handhabungsbauteil (34), welches einen Durchgang (48) aufweist, durch welchen die Schnur (16) verläuft, und wobei das Handhabungsbauteil (34) zwischen einer Gleitposition, in welcher der Durchgang (48) im Wesentlichen mit einer (50, 26) der Öffnungen ausgerichtet ist, und einer Blockierposition, in welcher der Durchgang (48) zu der Öffnung (50, 26) versetzt ist, bewegbar ist, **dadurch gekennzeichnet, dass** die Hülle (22, 34) eine Basis (22) aufweist, die an dem Feld befestigbar ist, und dass eine Öffnung (50, 26) der Ausgangs- und Eingangsöffnungen in Ausrichtung mit dem Loch (56) des Feldes angeordnet ist.

2. Blockiervorrichtung nach Anspruch 1, **dadurch gekennzeichnet, dass** das Handhabungsbauteil (34) aus einem Stück mit der Basis (22) besteht.

3. Blockiervorrichtung nach Anspruch 2, **dadurch gekennzeichnet, dass** die Basis (22) und das Handhabungsbauteil (34) einstückig als Spritzguss-Kunststoffeinrichtung ausgebildet sind.

4. Blockiervorrichtung nach einem der Ansprüche 1 bis 3, **dadurch gekennzeichnet, dass** das Handhabungsbauteil (34) von der Blockierposition in die Gleitposition durch elastische Verformung bewegbar ist.

5. Blockiervorrichtung nach einem der Ansprüche 1 bis 4, **dadurch gekennzeichnet, dass** das Handhabungsbauteil (34) und die Basis (22) jeweils zusammenwirkende Stoßflächen aufweisen, um die Gleitposition des Handhabungsbauteils zu bestimmen.

6. Blockiervorrichtung nach einem der Ansprüche 1 bis 5, **dadurch gekennzeichnet, dass** der Durchgang (48) der Schnur in dem Handhabungsbauteil in den Weg der Schnur (16) zwischen der Eingangsöffnung (50) und der Ausgangsöffnung (26) der Basis (22) eingeführt ist.

7. Blockiervorrichtung nach einem der Ansprüche 1 bis 6, **dadurch gekennzeichnet, dass** eine (26) der Öffnungen der Basis durch einen Bereich (24) zum Befestigen der Basis (22, 24) an dem Feld demarkiert ist.

8. Blockiervorrichtung nach Anspruch 7, **dadurch gekennzeichnet, dass** der Befestigungsbereich (24) eine geschlossene Kontur bildet.

9. Blockiervorrichtung nach einem der Ansprüche 1 bis 8, **dadurch gekennzeichnet, dass** der Befestigungsbereich (24) an einer Seite des Feldes (54) befestigt ist, und dass mindestens das Handhabungsbauteil (34) von der anderen Seite des Feldes durch das Loch (26) vorspringt.

10. Blockiervorrichtung nach einem der Ansprüche 1 bis 9, **dadurch gekennzeichnet, dass** das Feld ein flexibles Feld ist.

11. Blockiervorrichtung nach einem der Ansprüche 1 bis 10, **dadurch gekennzeichnet, dass** die Basis (22, 24) an dem Feld durch Kleben, Versiegeln oder eine genähte Naht befestigt ist.

12. Blockiervorrichtung nach einem der Ansprüche 1 bis 11, **dadurch gekennzeichnet, dass** das Handhabungsbauteil (34) längs einer allgemeinen Richtung im Wesentlichen senkrecht zu einer allgemeinen Ebene des Feldes (54), an welcher die Vorrichtung (10) befestigt ist, bewegbar ist.

13. Blockiervorrichtung nach einem der Ansprüche 1 bis 12, **dadurch gekennzeichnet, dass** die Eingangsöffnung (50) sich in einer Ebene erstreckt, die im Wesentlichen senkrecht zu einer allgemeinen Ebene des Feldes (54) ist, an welchem die Vorrichtung befestigt ist.

14. Blockiervorrichtung nach einem der Ansprüche 1 bis 13, **dadurch gekennzeichnet, dass** die Vorrichtung mehrere Schnüre oder mehrere Stränge einer gleichen Schnur aufnehmen kann.

15. Kleidungsstück mit einer Blockiervorrichtung gemäß einem der Ansprüche 1 bis 14.

## Revendications

1. Dispositif permettant de bloquer au moins un cordon (16), ledit cordon (16) sortant par un trou (56) d'un panneau (12, 54), ledit dispositif de blocage comprenant une enveloppe (22, 34) ayant un orifice d'entrée (50, 26) et un orifice de sortie (50, 26) pour le cordon et un élément de manoeuvre (34), ledit élément de manoeuvre (34) comprenant un passage (48) à travers lequel passe le cordon (16), et dans lequel l'élément de manoeuvre (34) est mobile entre une position de coulissement dans laquelle le passage (48) est sensiblement aligné avec l'un (50, 26) des orifices et une position de blocage dans laquelle ledit passage (48) est décalé dudit orifice (50, 26), **caractérisé en ce que** l'enveloppe (22, 34) comprend une base (22) adaptée pour être fixée sur le panneau, et **en ce qu'**un (50, 26) orifice des orifices de sortie et d'entrée est agencé en alignement avec le trou (56) du panneau.

2. Dispositif de blocage selon la revendication 1, **caractérisé en ce que** l'élément de manoeuvre (34) est réalisé d'un seul tenant avec la base (22).

3. Dispositif de blocage selon la revendication 2, **caractérisé en ce que** la base (22) et l'élément de manoeuvre (34) sont réalisés d'un seul tenant comme un ensemble de plastique moulé par injection.

4. Dispositif de blocage selon l'une des revendications 1 à 3, **caractérisé en ce que** l'élément de manoeuvre (34) est mobile de la position de blocage à la position de coulissement par déformation élastique.

5. Dispositif de blocage selon l'une des revendications 1 à 4, **caractérisé en ce que** l'élément de manoeuvre (34) et la base (22) comprennent des surfaces de butée pouvant coopérer pour déterminer la position de coulissement de l'élément de manoeuvre.

6. Dispositif de blocage selon l'une des revendications 1 à 5, **caractérisé en ce que** le passage (48) du cordon dans l'élément de manoeuvre est inséré dans la trajectoire du cordon (16) entre les orifices d'entrée (50) et de sortie (20) de la base (22).

7. Dispositif de blocage selon l'une des revendications 1 à 6, **caractérisé en ce que** l'un (26) des orifices de la base est délimité par une zone (24) pour fixer la base (22, 24) du panneau.

8. Dispositif de blocage selon la revendication 7, **caractérisé en ce que** la zone de fixation (24) forme un contour fermé.

9. Dispositif de blocage selon l'une des revendications 1 à 8, **caractérisé en ce que** la zone de fixation (24) est fixée sur un côté du panneau (54) ; et **caractérisé en ce qu'**au moins l'élément de manoeuvre (34) fait saillie à partir de l'autre côté du panneau par le trou (56).

10. Dispositif de blocage selon l'une des revendications 1 à 9, **caractérisé en ce que** le panneau (54) est un panneau flexible.

11. Dispositif de blocage selon l'une des revendications 1 à 10, **caractérisé en ce que** la base (22, 24) est fixée sur le panneau par collage, soudage à chaud ou couture.

12. Dispositif de blocage selon l'une des revendications 1 à 11, **caractérisé en ce que** l'élément de manoeuvre (34) est mobile le long d'une direction générale sensiblement perpendiculaire à un plan général du panneau (54) auquel le dispositif (10) est fixé.

13. Dispositif de blocage selon l'une des revendications 1 à 12, **caractérisé en ce que** l'orifice d'entrée (50) s'étend dans un plan qui est sensiblement perpendiculaire à un plan général du panneau (54) auquel le dispositif est fixé.

14. Dispositif de blocage selon l'une des revendications 1 à 13, **caractérisé en ce que** le dispositif peut recevoir plusieurs cordons ou plusieurs brins d'un même cordon.

15. Vêtement comprenant un dispositif de blocage selon l'une des revendications 1 à 14.
